# EUROPEAN PATENT APPLICATION

(11) **EP 4 336 748 A1**
(43) Date of publication of application: **13.03.2024**
(21) Application number: 23195682.2
(22) Date of filing: 06.09.2023
(51) Int. Cl.: H04B 7/185, H04B 7/26, H04W 24/02

(54) **AN ADAPTIVE TELECOMMUNICATION INFRASTRUCTURE USING DRONES**

(30) Priority: 07.09.2022 IL 29631322
(71) Applicant: Deutsche Telekom AG, 53113 Bonn (DE)
(72) Inventor: ELOVICI, Yuval, 7986400 Arugot (IL); BRODT, Oleg, 8471621 Beer Sheva (IL); SHABTAI, Asaf, 7684200 Hulda (IL); PUZIS, Rami, 7748707 Ashdod (IL); MIMRAN, David, 6215505 Tel Aviv (IL)
(74) Representative: Graf von Stosch Patentanwaltsgesellschaft mbH

(57) **Abstract**

A system for increasing the flexibility of telecommunication infrastructures, comprising a plurality of mobile ad-hoc extensions for a cellular network, in the form of cellular base-stations, each carried and powered by a drone, to form a swarm of drones that carry the ad-hoc extensions; a control apparatus adapted to receive a demand for extensions of the cellular network; determine the size of the swarm, the optimal location of each drone in the swarm and the time period of staying in each location, for providing additional cellular coverage that fulfills the demand.

## Description

### Field of invention

The present invention relates to the field of telecommunication infrastructures. More particularly, the present invention relates to an adaptive telecommunication infrastructure using drones.

### Background for the invention

The conventional communication infrastructure is primarily stationary and optimized for stable internet consumption in terms of location and bandwidth. Current solutions, such as bandwidth over-provisioning and mobile base stations, typically installed on trucks, do not support the agile nature of emerging Internet consumption.

Internet consumption constantly grows exponentially due to better communications and data center infrastructure and exciting new applications such as virtual reality, streaming, gaming, smart manufacturing, and many other applications.

Typical communication consumption patterns are very dynamic and assemble in different forms, which challenge the inherent static Internet infrastructure from multiple various aspects.

One aspect is the network connectivity. For example, a large group of tourists on a hike in an area with low cellular coverage. Another aspect may be compute power consumption, for example, Virtual Reality (VR) / Augmented Reality (AR) or gamers that gather from time to time in one of their homes and require a local data center with super-low latency communication. Another aspect may be data consumption, for example, a family which decided that they want to experience high resolution Virtual Reality (VR - is a simulated 3D environment that enables users to explore and interact with a virtual surrounding in a way that approximates reality, as it is perceived through the users' senses) movie this evening. All the above scenarios cause peaks in the demand for high data rate connection.

Such peaks in demand are highly challenging for the network and most important for maintaining a consistent user experience for all the users, since it requires network flexibility and flexibility on-demand. Surges in data and compute power consumption may overload the communication infrastructure, which is usually more optimized for regular day-to-day usage.

The static nature of the internet service provider infrastructure is inefficient for supporting dynamic and on-demand internet usage patterns becoming even more popular with everyday life events.

Telecommunications infrastructure is typically static geographically, and any change to the infrastructure is expensive, cumbersome, and requires extensive planning. New technologies, such as self-organizing networks (an automation technology designed to make the planning, configuration, management, optimization and healing of mobile Radio Access Networks simpler and faster), to shift capabilities across cellular physical assets. However, they are still confined to the initial topological layout of the cellular network.

From the demand aspect, Internet consumers become more volatile in their network requirements across day and night, where the changes range from different locations that require coverage - up to various applications that have varying bandwidth requirements.

The mismatch between supply and demand poses a challenge for the network operators, who need to invest substantial resources in maintaining adequate service levels for their consumers and tolerate to difficult network extension decisions. Operators' investment decisions many times embed a compromise between economic factors and service levels. For example, the investment in network infrastructure to connect rural areas or to support dynamic demand (e.g., stadiums or concert arenas during significant events or rare massive data transfers) may be unjustified itself. Another example is how much to invest in network infrastructure, in areas where there are occasional public gatherings, where such infrastructure will be sub-utilized all the time, and at peak times, it will be over-utilized.

Some of the above limitations are addressed with the concept of deploying mobile base-station service trucks, on demand. However, this solution has limited flexibility and is costly to operate.

It is therefore an object of the present invention to provide a system for increasing the flexibility of telecommunication infrastructures.

It is another object of the present invention to provide a system for creating highly optimized ISP infrastructure.

It is a further object of the present invention to provide a system for bridging the inefficiency gap between supply and demand while offering a superior and stable Internet consumption experience for users, whenever and wherever they are.

Other objects and advantages of the invention will become apparent as the description proceeds.

### Summary of the Invention

A system for increasing the flexibility of telecommunication infrastructures, comprising:
a) a plurality of mobile ad-hoc extensions for a cellular network, in the form of cellular base-stations, each carried and powered by a drone, to form a swarm of drones that carry the ad-hoc extensions;
b) a control apparatus for:
c) receiving a demand for extensions of the cellular network; and
d) determining the size of the swarm, the optimal location of each drone in the swarm and the time period of staying in each location, for providing additional cellular coverage that fulfills the demand.

A system for increasing the flexibility of telecommunication infrastructures, comprising:
a) a plurality of data storage devices, each carried and powered by a drone, to form a swarm of drones that carry the data storage devices;
b) a control apparatus for:
c) receiving a demand for data delivery from a source to a destination;
d) at the source, recording the data to be delivered into each of the storage devices;
e) determining the size of the swarm, the optimal location of each drone in the swarm and the time period of staying in each location, for physically carrying each data storage device from the source to the destination; and
f) at the destination, transferring the data stored in each data storage device to a stationary data storage media, to fulfill the demand.

The drones may be used as movable edge units for providing edge compute tasks.

The source or destination may be a data center, a network edge, AR consumers, VR consumers or 360° video.

The swarm of drones may be used to implement a Radio Access Network (RAN) of a cellular operator.

The additional cellular coverage may be provided to areas of sports events, areas with sporadic settlements across large geographic area, ad-hoc disaster locations or un-serviced areas due to technical malfunctioning.

The swarm may consist of a fleet of autonomous drones, each carrying a mobile base station and a swarm management system with dynamic constellation deployment, to provide the best coverage.

The fleet may be dynamically deployed from a vehicle, which arrives at the target location.

The swarm of drones may communicate with one or more satellites and functions as a hub that bunches communications from a plurality of handsets into a communication path with the one or more satellite.

### Brief Description of the Drawings

The above and other characteristics and advantages of the invention will be better understood through the following illustrative and non-limitative detailed description of preferred embodiments thereof, with reference to the appended drawings, wherein:
- Fig. 1 shows an example of using drones as a mobile ad-hoc extension for cellular networks, according to an embodiment of the invention;
- Fig. 2 shows a typical drones service area;
- Fig. 3 describes the flow of events where the client sends a request to download a file from the internet;
- Fig. 4 shows physical delivery of large data transfers (backups) between two remote data centers, using drones may be performed using latent; and
- Fig. 5 shows an example of large data uploads between a customer and a data center, using a drone with an empty flash drive.

### Detailed Description of the Invention

The method of the present invention uses mobility capabilities of drones to add flexibility to the telecommunication infrastructure. By using the term drone it is meant to include any type of an Unmanned Aerial Vehicle (UAV) that has an autonomous or remote controlled hovering capability at a predetermined location. Accordingly, drones may be used as mobile ad-hoc extension for cellular networks, movable edge units for serving edge compute tasks and as massive data delivery vehicles. The solution of the present invention is a fusion of the mobile capabilities of drones into the Internet service providers' infrastructure. Drones can serve as mobile computation units to bring the edge computing cluster (that provides compute and storage execution resources for applications with networking close to the end users, typically within or at the boundary of operator networks) even closer to the consumers. Drones may carry ad-hoc mobile antennas which are positioned, based on concrete and predictable demand. Drones also may be used as data delivery platforms for physically moving extreme amounts of data between a data center and the network edge (the area where a device or local network interfaces with the internet), without congesting the network, to serve data centers or Augmented Reality (AR - an interactive experience that combines the real world and computer-generated content)/VR consumers.

According to the present invention, the operator's Radio Access Network (RAN - is a major component of a wireless telecommunications system that connects individual devices to other parts of a network through a radio link that link goes to the core network, which manages subscriber information, location and more) consists of a fleet of hundreds and thousands of drones, where each drone has connectivity, compute, and storage capabilities. By utilizing intelligent fleet management software and algorithms, the operator can change the shape of the infrastructure at any point in time, on demand. Datacenter and network capabilities that are based on drones can optimize energy footprint, cost, and quality of service.

The cost efficiency of moving large amounts of data on drones vs. the conventional alternative of moving data via landline or cellular networking infrastructure was found to be more economical, efficient and faster to move the data via a drone and not via the network infrastructure.

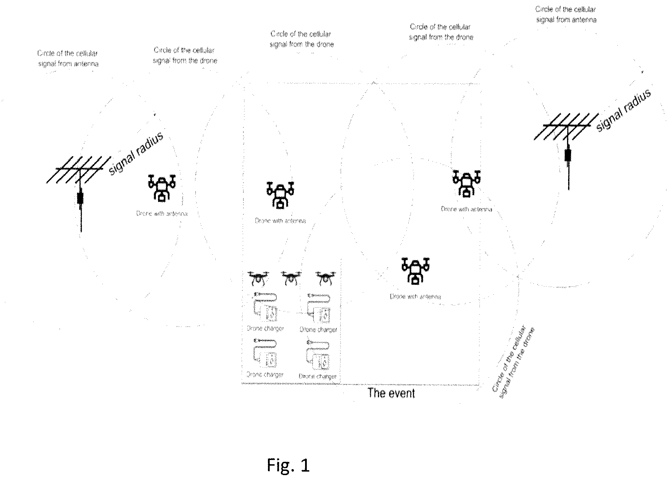

Drones may be used as a mobile ad-hoc extension for cellular networks, as shown in Fig. 1. There are several scenarios where coverage is required in unique events or locations, which cannot be served with fixed infrastructure. Such events may be, for example:
1) Large sports events taking place in a stadium that is a location with low demand most of the time as only players and staff are using Internet in that location. On the other hand, during the weekend, the place is occupied with tens of thousands of fans excited to share their multimedia experiences from the game.
2) Country areas where there are sporadic settlements across large geographic area. In this area there are places with only few houses and locations with up to hundred family homes.
3) Ad-hoc disaster location which is typically congested by support and rescue teams, which require high bandwidth instantly at the beginning of the event.
4) Temporary un-serviced area in a dense metropolitan location due to technical malfunction and service level needs to be maintained upon demand.

Every drone can be a cellular antenna with the right equipment and its viability depends on battery time, range (see table I) and location of other peer drones, in order to form a flexible topological cellular service.

Even though the basic technology for drone-carried mobile base stations is already available (for example the Robotix's CX-180 ICEMAN1 can fly up to 400 feet and provide cellular coverage up to 50 square miles), these devices are stand-alone, not yet autonomous, and do not have swarm management capabilities. The flexible the telecommunication infrastructure proposed by the present invention may operate an intelligent swarm of autonomous or remote-controlled drone-carried (and powered) mobile base stations, which provides agile and timely response to changing demands. The proposed plurality of drone-carried mobile base stations may serve as ad-hoc extensions for a cellular network.

By utilizing intelligent fleet management capabilities implemented, for example, by a control apparatus with dedicated software, the operator can decide to deploy part or all the fleet to fulfill a specific demand, where the drones can be aligned in dynamic constellations, to provide the best coverage. The control apparatus will receive a demand for extensions of a cellular network, and in response, determine the size of the swarm, the optimal location of each drone in the swarm and the time period of staying in each location, for providing additional cellular coverage that fulfills the demand.

The additional cellular coverage is provided to areas of sports events, areas with sporadic settlements across large geographic area, ad-hoc disaster locations or un-serviced areas due to technical malfunctioning.

A fleet can be dynamically deployed from a vehicle which arrives at the target location and fold back when the task is fulfilled. In this case, algorithms are developed for managing the location and topology of the fleet, based on machine learning and taking into account data, such as Service Level Agreement (SLA), coverage, viability of drones, schedule for charging, etc.

Drones may also serve as movable edge units with compute/storage and networking capabilities that can be in high proximity to the consumer, in case of lack of capacity in the static edge infrastructure, where the drone completes that capacity. In both cases, the goal is to be located as close as possible to the consumer, so as to either serve data very fast or to provide compute power for applications that require low latency.

Accordingly, a fleet (or swarm) of drones may provide services to a model called "edge as a service" where it is hired indirectly by customers, which require higher service level for a specific period of time, and the drones can temporarily serve the need of the customer on time or bandwidth basis. This feature opens the market for interoperability across edge vendors, as well as edge infrastructure providers. According to a further embodiment, massive amounts of data can be physically delivered using drones. Physical delivery of data bulks may be efficient for the following reasons:
1) Storage capacity increases and cost per GB drops much faster than the network bandwidth.
2) Drones are an emerging low cost, flexible, efficient last mile delivery technology.
3) Bandwidth is considered one of the most serious bottlenecks in the outreach of novel entertainment technologies such as virtual reality (VR) and 360° video.

If for example, a high quality (4K) VR play that lasts for three hours should be delivered, it requires around 25 TB storage. In this case, it will take 42 hours to download the requested content at the maximal speed of a typical 500 Mbps home fiber internet connection.

According to an embodiment of the invention, the requested content may be delivered through high bandwidth connections to a local Content Delivery Network (CDN - a geographically distributed group of servers which work together to provide fast delivery of Internet content), where it will be written into a portable media drive. Then, the drive will be delivered by a drone from the local CDN to the consumer. Drones can deliver data even to the toughest rural areas where infrastructure renewal is not foreseen. The entire process may be performed in a few hours (rather than 42 hours).

Last mile content delivery over avian carriers such as drones dramatically improves the media consumption at home. Additional uses may include periodic data backup, data migration (the process of moving data from one location to another, one format to another, or one application to another), Closed-Circuit Television (CCTV - also known as video surveillance) bulk updates, extreme bandwidth data delivery to/from mobile stations such as 360° TV news truck, and even short-term rental of communication and media equipment. For example, delivering a VR movie with the data and glasses to watch it.

ISPs can use the above physical delivery network that allows extreme bandwidth data delivery, to offer new services, such as short term rental of communication and electronic equipment.

According to another embodiment, a plurality of data storage devices, such as flash drives may be used to increase the flexibility and capacity of telecommunication infrastructures. Each data storage device will be carried and powered by a drone, to form a swarm of drones that carry these data storage devices. A control apparatus with dedicated software will receive a demand for data delivery from a source to a destination. The data to be delivered to each storage device will be recorded at the source and the size of the swarm, the optimal location of each drone in the swarm and the time period of staying in each location will be determined, for physically carrying each data storage device from the source to the destination. At the destination, the data that has been stored in each data storage device will be transferred to a stationary data storage media, to fulfill the demand.

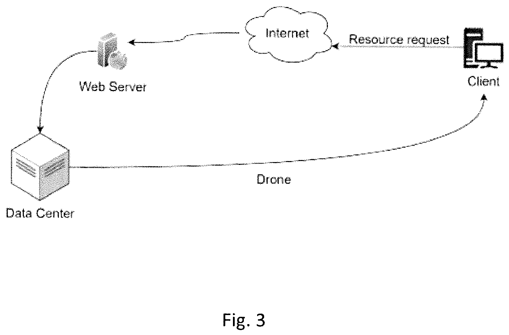

In some applications, a client may want to download a large file from the internet, for example, the contents of a rich VR world or a high definition movie. Fig. 3 describes the flow of events where the client sends a request to download a file from the internet whether it is an explicit request to directly download a file, or an implicit request for downloading a large file as part of the normal operation of a web based application. The consumer request is processed by a web server which detects the size threshold of the downloaded file and if it is above that threshold, it sends a request to a data center close to the consumer location to physically deliver that file. The file is autonomously copied to a drone's flash drive and that flash drive is either already located in a docked drone or is being inserted into a drone, waiting for delivery. That drone flies to the closest docking station in a Local Area Network (LAN - is a network contained within a small geographic area, usually within the same building) range and copies the file from the flash drive into a temporary storage, which is then copied via the local network onto the consumer device, while signaling continuation of operation for action which started the download.

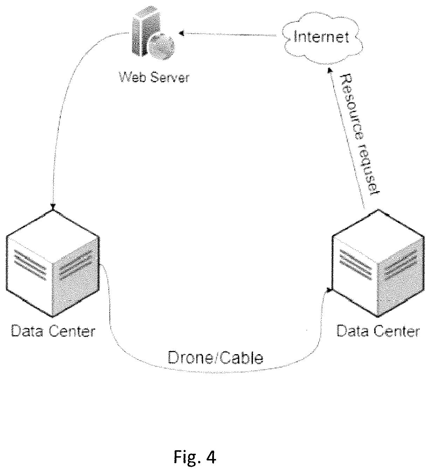

Physical delivery using drones may be performed using latent large data transfers (Backups), where a large file or set of files need to be transferred between two remote data centers, as shown in Fig. 4. Large data uploads may be performed, for example, when a customer wants to upload a very large file.

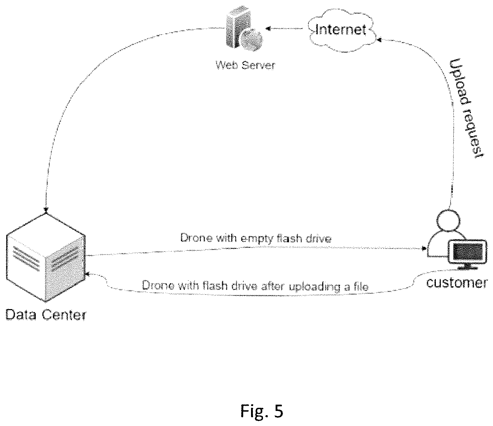

A drone with an empty flash drive will arrive to the customer location and after copying the file to the flash drive, the drone will fly back to the destination data center, as shown in Fig. 5.

The system architecture considers the bandwidth, including the flight speed of the drone, the time it takes to transfer a file to/from the flash drive on the drone and the size of flash drive needed for data delivery.

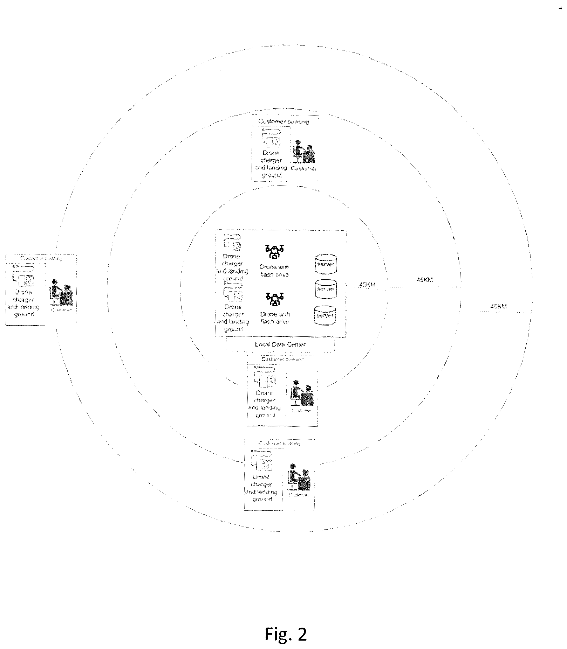

Another consideration is the service area, including the flight range of the drone without recharging, the recharging time and the smallest mobile base stations that can be carried by a drone. Fig. 2 shows a typical drones' service area. For applications that involve large data uploads, the features that should be considered are the range that can be served by a mobile base station carried by the drone, which drones are available and what are their costs, the cost of a flash drive and the deployment costs of drone landing pads and chargers.

The basic task of the drone is to deliver a flash drive that contains a file to a person or business or data center. The beginning position of the drone is the local data center that contains the file. The drone will get coordinates of the end point (destination) and therefore, must have localization capability, such as built-in GPS. The localization capability is required for defining the route of travel for the drone, as well as for monitoring the movement of the drone in real-time and controlling it, to achieve the goal in the most efficient manner. Table I shows different types of drones and their respective movement characteristics. The most important factors that affect data transfer-ability capabilities in a drone are: range, speed and charging time.

**TABLE I**

| | PRICE | TYPICAL SPEED | MAX SPEED | TIME FLIGHT BETWEEN CHARGES | RANGE | CHARGING TIME |
|---|---|---|---|---|---|---|
| T-MOTOR M 690a | 3599$ | 10-35km/h | 65km/h | ∼20-60 minutes | 10 km | |
| Wingcopter 198 | | 100km/h | 144km/h | ∼110 minutes | 110 km | 90 minutes |
| Wingcopter 178 | | 100km/h | 150km/h | ∼120 minutes | 120 km | 90 minutes |
| Matrice 600 pro | 6600$ | 40km/h | 65km/h | ∼38 minutes | ∼25-30 km | 30 minutes |
| Inspire 2 | 3300$ | --- | 94km/h | ∼25 minutes | ∼40 km | |

According to Table I, there are substantial differences between different drones - some can fly a maximum of 10 KM and some can reach a 120 KM maximum range. Drones with a larger range cost more and are also faster than the low range peers. Therefore, if it required to transfer a file from a data center to a customer that lives less than 10 KM from the local data center, a cheap drone can be used, since due to the short distance, it will not have much effect on the transfer time despite of the slow speed. If the transfer of data requires a longer distance flight, it will be best to use a drone that is faster and can cover the entire range without recharging.

The second component is the drone charging capability and landing locations and facilities. Drone chargers increase the range of travel and reach more customers while at the same time, slow the rate of data transfer due to charging time.

If every building has infrastructure with docking stations, integrated with fast charging or even battery replacement, the system will be more efficient. In Figure IV-B we can see a suggested scheme of organizing drones based on range, charging station and destinations.

The flash drive serves as a storage tool for the data. Each drone will have a static flash drive accessible via USB on the drone docking area or a mechanism for inserting and replacing flash drives. Alternatively, of the content on the flash drive may be prepared before the moment of readiness to departure. A flash drive may be selected according to cost, data transfer rate and input type. The docking station should be compatible with the data transfer socket of the flash drive.

Today, data is mostly transferred from data centers to the customers via a Digital subscriber line (DSL - technologies that are used to transmit digital data over telephone lines) or optical fiber technology, where 5G introduces cellular options as well as satellite based internet.

If the download speed in DSL is 250 MB/S the effective download rate will be about 31.25 MB/S. In such case, downloading a 2.5TB file will take approximately 23 hours. On the other hand, if a flash drive of specification USB 3.2(gen2*2) will be used, if the client is 100Km from the local data center, it will take approximately 1.5 hour to transfer the same file (17 minutes to write the file to the flash drive, 1 hour of drone flight and 17 minutes to copy the file from the flash drive to the computer of the client).

Therefore, from certain data size points and distance, it is more economic to send the data over a drone, rather than transmitting it via the internet. Such capabilities can be extremely valuable in many cases, such as rapid recovery from back-up, critical data transfer, and even regular download/upload acceleration service for subscribers.

According to another embodiment, the swarm of drones may be adapted to communicate with one or more satellites, in order to function as a hub that bunches communications from a plurality of handsets into a communication path with a satellite.

As various embodiments and examples have been described and illustrated, it should be understood that variations will be apparent to one skilled in the art without departing from the principles herein. Accordingly, the invention is not to be limited to the specific embodiments described and illustrated in the drawings.

## Claims

1. A system for increasing the flexibility of telecommunication infrastructures, comprising:
a) a plurality of mobile ad-hoc extensions for a cellular network, in the form of cellular base-stations, each carried and powered by a drone, to form a swarm of drones that carry said ad-hoc extensions;
b) a control apparatus for:
c) receiving a demand for extensions of said cellular network; and
d) determining the size of said swarm, the optimal location of each drone in said swarm and the time period of staying in each location, for providing additional cellular coverage that fulfills said demand.

2. A system for increasing the flexibility of telecommunication infrastructures, comprising:
a) a plurality of data storage devices, each carried and powered by a drone, to form a swarm of drones that carry said data storage devices;
b) a control apparatus for:
c) receiving a demand for data delivery from a source to a destination;
d) at said source, recording the data to be delivered into each of said storage devices;
e) determining the size of said swarm, the optimal location of each drone in said swarm and the time period of staying in each location, for physically carrying each data storage device from said source to said destination; and
f) at said destination, transferring the data stored in each data storage device to a stationary data storage media, to fulfill said demand.

3. A system according to claim 2, in which the drones are used as movable edge units for providing edge compute tasks.

4. A system according to claim 2, in which the source or destination are selected from the group of:
- a data center;
- a network edge;
- AR consumers;
- VR consumers;
- 360° video.

5. A system according to claim 1, in which the swarm of drones is used to implement a Radio Access Network (RAN) of a cellular operator.

6. A system according to claim 2, in which the additional cellular coverage is provided to areas of:
- sports events;
- areas with sporadic settlements across large geographic area;
- ad-hoc disaster locations;
- un-serviced areas due to technical malfunctioning.

7. A system according to claim 1, in which the swarm consists of a fleet of autonomous drones, each carrying a mobile base station and a swarm management system with dynamic constellation deployment, to provide the best coverage.

8. A system according to claim 1, in which the fleet is dynamically deployed from a vehicle, which arrives at the target location.

9. A system according to claim 1, in which the swarm of drones communicates with one or more satellites and functions as a hub that bunches communications from a plurality of handsets into a communication path with said one or more satellites.
